# EUROPÄISCHE PATENTSCHRIFT

(11) **EP 2 423 639 B1**
(45) Veröffentlichungstag und Bekanntmachung des Hinweises auf die Patenterteilung: **27.03.2013**
(21) Anmeldenummer: 10174666.7
(22) Anmeldetag: 31.08.2010
(51) Int. Cl.: G01B 11/14, G01B 11/245, G06T 7/00

(54) **Verfahren zur Ermittlung von Spaltmaß und/oder Bündigkeit von Karosserieteilen eines Kraftfahrzeugs und Steuerungsprogramm**
Method for determining gap dimensions and/or flushness of bodywork sections of a motor vehicle and control program
Procédé d'établissement de mesures d'écartement et/ou d'affleurement de pièces de carrosserie d'un véhicule automobile et programme de commande

(43) Veröffentlichungstag der Anmeldung: 29.02.2012
(73) Patentinhaber: Siemens Aktiengesellschaft, 80333 München (DE)
(72) Erfinder: Jodoin, Thomas, 91126, Schwabach (DE); Pförtner, Andreas, 90587, Obermichelbach (DE); Simon, Frank, 91052, Erlangen (DE)

(56) Entgegenhaltungen:
- EP-A1- 1 355 126
- WO-A2-2008/043685
- DE-A1- 19 910 699
- FR-A1- 2 928 453
- US-A- 5 416 590

## Beschreibung

Beim Fügen von Karosserieteilen eines Kraftfahrzeugs ergeben sich Spalte und Bündigkeiten zwischen Karosserieteilen. Im Rahmen von Qualitätskontrollen, zur Steuerung von Robotern oder in Feedback-Schleifen werden Spaltmaß und Bündigkeit vorzugsweise automatisiert vermessen. Bei einer solchen Vermessung ermittelte Meßwerte werden beispielsweise auch an übergeordnete Fertigungsautomatisierungssysteme übergeben.

Zur Messung von Spaltmaß und Bündigkeit von Karosserieteilen werden bisher zweidimensionale Meßverfahren angewendet, die auf Laser-Triangulationsmeßsystemen oder auf speziellen Beleuchtungssystemen basieren, mit denen Kanten besonders gut für Kameraaufnahmen sichtbar gemacht werden. Laser-Triangulationsmeßsystemen liefern lediglich Meßwerte entlang einer Abtastlinie oder -kurve, beispielsweise als Projektion einer Kante einer gekrümmten Oberfläche auf eine Betrachtungs- bzw. Meßebene. Zugehörige Auswertungsalgorithmen ermöglichen daher nur eine Analyse von Kurven, die innerhalb einer Ebene verlaufen. Auf einer solchen Grundlage werden entsprechend bisherigen Ansätzen mittels Linien-, Kreis- oder Polynomfits in zwei Dimensionen Spaltmaß und Bündigkeit berechnet. Meßverfahren mit Kanten hervorhebenden Beleuchtungssystemen liefern zwar ebenfalls nur zweidimensionale Meßwerte, allerdings parallel einem zu vermessenden Spalt. Grundsätzlich liefern weder Meßverfahren, die auf Laser-Triangulationsmeßsystemen basieren, noch Meßverfahren unter Verwendung Kanten hervorhebender Beleuchtungssysteme dreidimensionale Meßdaten.

Aus EP 1 355 126 A1 ist ein zweidimensionales Verfahren zum Vermessen eines Fügebereichs zwischen einem ersten Bauteil und einem zweiten Bauteil bekannt, bei dem das erste Bauteil eine erste Oberfläche und das zweite Bauteil eine zweite Oberfläche aufweist. Dabei wird eine erste Gerade konstruiert, die an den Verlauf der ersten Oberfläche angepaßt ist. Zusätzlich wird eine zweite Gerade konstruiert, die an den Verlauf der zweiten Oberfläche angepaßt ist. Darüber hinaus wird eine dritte Gerade konstruiert, welche die erste und zweite Gerade im Fügebereich schneidet. Die dritte Gerade schließt mit der ersten Geraden einen ersten Winkel ein. In entsprechender Weise schließt die dritte Gerade mit der zweiten Geraden einen zweiten Winkel ein. Darüber hinaus weist die dritte gerade zum ersten Bauteil einen ersten Abstand auf, während sie zum zweiten Bauteil einen zweiten Abstand hat. Sowohl die beiden Winkel als auch die beiden Abstände stehen in einer vorbestimmten Beziehung zueinander. Aus der Lage der dritten Geraden kann mindestens ein Merkmal des Fügebereichs bestimmt werden.

Weitere zweidimensionale Meßverfahren sind aus US 4,498,776 und US 5,129,010 bekannt. Nachteil dieser Verfahren ist, daß für jeden zu messenden Spalt pro Fahrzeug ein Sensor erforderlich ist. Dadurch kann pro Meßplatz je nach zu prüfendem Fahrzeugtyp eine zweistellige Anzahl an Abtastvorrichtungen zum Einsatz kommen. Hieraus ergeben sich hohe Kosten für derartige Prüfstände, die insbesondere bei Umstellung auf neue Fahrzeugtypen hohe Folgekosten nach sich ziehen. Ein weiterer Nachteil zweidimensionaler Meßverfahren unter Verwendung von Laser-Triangulationsmeßsystemen besteht darin, daß Laser-Triangulationsmeßsysteme stets so orientiert werden müssen, daß projizierte Laserlinien senkrecht zum zu vermessendem Spalt liegen. Ansonsten werden Spalte mit zweidimensionalen Meßverfahren breiter gemessen als sie tatsächlich sind. Bei den aus US 4,498,776 und US 5,129,010 bekannten Meßverfahren ist darüber hinaus problematisch, daß die Bündigkeit lediglich punktuell entlang einer den zu vermessenden Spalt idealerweise senkrecht schneidenden Abtaststrecke gemessen wird. Werden zwei durch den Spalt getrennte Karosserieteile relativ zueinander um eine durch die Abtaststrecke verlaufende Achse zueinander verdreht, ändert sich ein auf obige Weise ermittelter Bündigkeitsmeßwert nicht, der somit nur unzureichend repräsentativ für die Bündigkeit zwischen zwei aufeinander auszurichtenden Karosserieteilen ist.

Aus US-5416590 ist ein Verfahren zur Ermittlung von Spaltmaß und Bündigkeit bekannt, wobei zwei Lichtebenen projiziert werden.

Der vorliegenden Erfindung liegt daher die Aufgabe zugrunde, ein genaues und kostengünstig zu implementierendes Verfahren zur Ermittlung von Spaltmaß und Bündigkeit von Karosserieteilen eines Kraftfahrzeugs sowie eine geeignete Implementierung des Verfahrens anzugeben.

Diese Aufgabe wird erfindungsgemäß durch ein Verfahren mit den in Anspruch 1 angegebenen Merkmalen, ein Steuerungsprogramm mit den in Anspruch 7 angegebenen Merkmalen und eine Meßvorrichtung mit den in Anspruch 8 angegebenen Merkmalen gelöst. Vorteilhafte Weiterbildungen der vorliegenden Erfindung sind in den abhängigen Ansprüchen angegeben.

Erfindungsgemäß werden zur Ermittlung von Spaltmaß und Bündigkeit von Karosserieteilen eines Kraftfahrzeugs zueinander auszurichtende Karosserieteile an einer Mehrzahl vorgebbarer Meßbereiche mittels jeweils einer Abtasteinrichtung dreidimensional abgetastet. Die Abtasteinrichtungen sind dabei auf zumindest eine Karosseriefuge ausgerichtet und tasten die auszurichtenden Karosserieteile nicht nur entlang einer Abtastlinie oder -kurve ab, sondern innerhalb flächiger Meßbereiche. Aus mittels der Abtasteinrichtungen erfaßten Abtastwerten werden den auszurichtenden Karosserieteilen zugeordnete dreidimensionale Flächenelemente innerhalb der Meßbereiche ermittelt. Für die ermittelten dreidimensionalen Flächenelemente werden jeweils Art, Position und Orientierung im Raum ermittelt. Aus Art, Position und Orientierung zumindest zweier benachbarter dreidimensionaler Flächenelemente wird Spaltmaß bzw. Bündigkeit für zumindest zwei zueinander auszurichtende Karosserieteile ermittelt. Ein erfindungsgemäßes Ersetzen von zweidimensionalen Meßverfahren durch eine dreidimensionale Profilometrie ermöglicht eine Nutzung von deutlich stabileren und flexibleren 3D-Algortihmen zur Berechnung von Spaltmaß und Bündigkeit.

Die vorliegende Erfindung wird nachfolgend an einem Ausführungsbeispiel anhand der Zeichnung näher erläutert. Es zeigt
- Figur 1: eine schematische Darstellung einer Meßvorrichtung zur Ermittlung von Spaltmaß und Bündigkeit von Karosserieteilen eines Kraftfahrzeugs,
- Figur 2: ein Ablaufdiagramm für eine Messung von Spaltmaß und Bündigkeit,
- Figur 3: ein Ablaufdiagramm für eine Messung von Spaltmaß und Bündigkeit sowie eine anschließende Übermittlung von Korrekturwerten an eine Robotersteuerung,
- Figur 4: ein schematische Darstellung von zwei Karosserieteilen und den Karosserieteilen innerhalb eines Meßbereichs zugeordneten dreidimensionalen Flächenelementen.

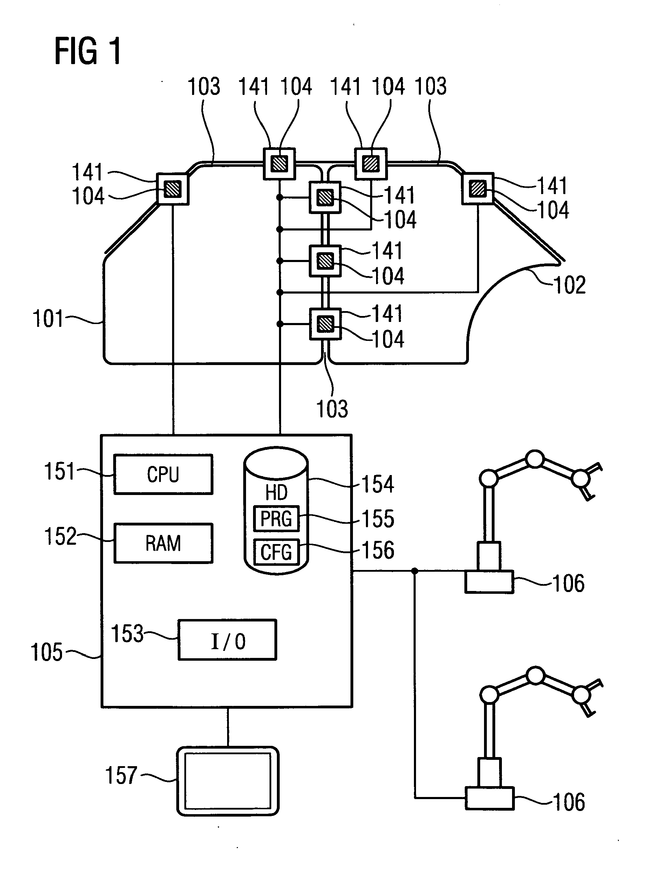

Die in Figur 1 dargestellte Meßvorrichtung zur Ermittlung von Spaltmaß und Bündigkeit von Karosserieteilen 101, 102 eines Kraftfahrzeugs umfaßt eine Mehrzahl von Abtasteinrichtungen 104 zur dreidimensionalen Abtastung zueinander auszurichtender Karosserieteile 101, 102 an einer Mehrzahl vorgebbarer Meßbereiche 141. Dabei sind die Abtasteinrichtungen 104 auf mehrere Karosseriefugen 103 ausgerichtet und beispielsweise durch Laserscanner realisiert. Die Meßbereiche 141 sind fahrzeugspezifisch parametriert. Die Abtasteinrichtungen 104 können daher anhand einer vorgegebenen fahrzeugspezifischen Parametrierung 156 auf die Karosseriefugen 103 ausgerichtet werden. Fahrzeugspezifische Parametrierungen 156 sind in einem Datenspeicher 154 einer mit den Abtasteinrichtungen 104 verbundenen Rechnereinheit 105 verbunden. Durch eine Ansteuerung der Abtasteinrichtungen 104 mit der Rechnereinheit 105 erfolgt eine gleichzeitige Vermessung mehrerer Karosseriefugen 103.

Die Rechnereinheit 105 umfaßt neben dem Datenspeicher 154 einen Prozessor 151, einen Arbeitsspeicher 152 und eine Eingabe-/Ausgabeeinheit 153, die über ein internes Bus-System miteinander vernetzt sind. Im vorliegenden Ausführungsbeispiel ist die Rechnereinheit 105 außerdem mit mehreren Robotern 106 verbunden, die als Transport- bzw. Montagevorrichtungen Karosserieteile 101, 102 aufnehmen und zum Einbau in ein Kraftfahrzeug positionieren.

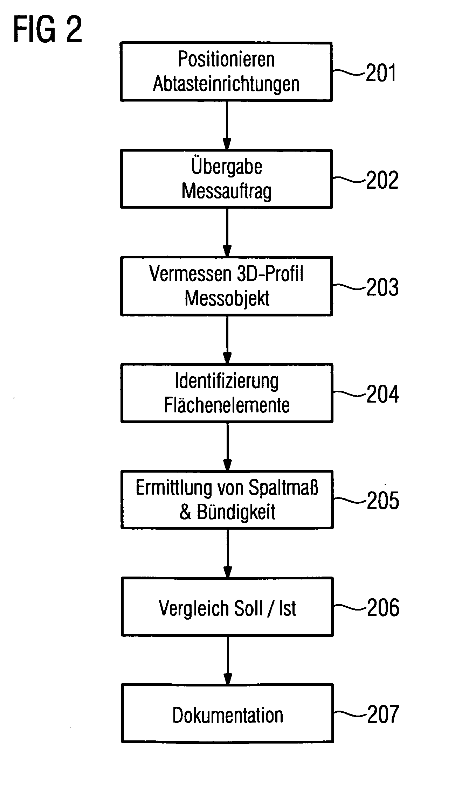

Im Datenspeicher 154, der beispielsweise eine Festplatte oder ein Flash-Speicher sein kann, ist auch ein Steuerungsprogramm 155 gespeichert, das in den Arbeitsspeicher 152 ladbar ist und durch den Prozessor 151 verarbeitbare Codeabschnitte aufweist. Bei Ablauf des Steuerungsprogramms 155 werden entsprechend Schritt 201 des in Figur 2 dargestellten Ablaufdiagramms die Abtasteinrichtungen 104 unter Verwendung einer fahrzeugspezifischen Parametrierung 156 eines identifizierten Fahrzeugtyps auf die Karosseriefugen 103 ausgerichtet. Anschließend erfolgt in Schritt 202 eine Übergabe eines Meßauftrags an die Abtasteinrichtungen 104. Danach wird entsprechend Schritt 203 ein 3D-Oberflächen-Profil der Karosserieteile 101, 102 als Meßobjekten vermessen. Dabei werden die zueinander auszurichtenden Karosserieteile 101, 102 an einer Mehrzahl vorgebbarer Meßbereiche 141 mittels jeweils einer Abtasteinrichtung 104 dreidimensional abgetastet.

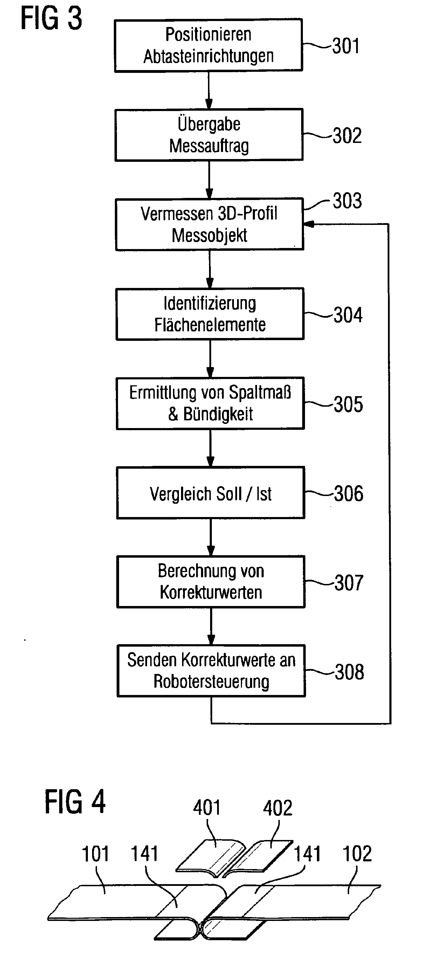

In Schritt 204 werden den auszurichtenden Karosserieteilen 101, 102 innerhalb der Meßbereiche 141 zugeordnete dreidimensionale Flächenelemente 401, 402 aus mittels der Abtasteinrichtungen 104 erfaßten Abtastwerten identifiziert (siehe auch Figur 4). Für die identifizierten dreidimensionalen Flächenelemente 401, 402 werden dabei jeweils Art, Position und Orientierung im Raum ermittelt. Anschließend erfolgt in Schritt 205 für zwei zueinander auszurichtende Karosserieteile eine Ermittlung von Spaltmaß und Bündigkeit aus Art, Position und Orientierung zweier benachbarter dreidimensionaler Flächenelemente. Danach werden gemäß Schritt 206 Ist-Werte für Spaltmaß und Bündigkeit mit im Datenspeicher 154 gespeicherten Soll-Werten verglichen. Abschließend erfolgt hierzu in Schritt 207 eine Dokumentation, beispielsweise an einem der Rechnereinheit 105 zugeordneten Anzeigegerät oder durch Speicherung eines Vergleichsergebnisses im Datenspeicher 154.

Die dreidimensionalen Flächenelemente 401, 402 können beispielsweise mittels Profilometrie ermittelt werden. Profilometrie ist ein berührungsloses Meßverfahren, um Oberflächenprofile beispielsweise mittels eines 3D-Laserscanners mit einer Genauigkeit im Mikrometer-Bereich abzutasten. Das Meßverfahren beruht bei Laser-Profilometrie auf einer Autofokussierung eines Laserstrahles auf einer zu vermessenden Oberfläche. Während die Oberfläche rasterförmig abgefahren wird, ermitteln optische Sensoren eine Defokussierung aufgrund von Oberflächenstrukturen. Auf diese weise können Höhendifferenzen ermittelt werden. Mittels einer Mikrostelleinheit wird eine Fokussiereinheit danach wieder auf einen ursprünglichen Fokussierabstand zurückgestellt.

Eine flächenhafte Vermessung der zueinander auszurichtenden Karosserieteile 101, 102 kann auch mittels Triangulation unter Verwendung von auf die Meßbereiche emittiertem codiertem Licht erfolgen. Die zueinander auszurichtenden Karosserieteile 101, 102 können des weiteren auch mittels Interferometrie oder Stereographie flächenhaft vermessen werden. Bei Interferometrie werden von einem Meßobjekt ausgehende Wellen durch ein Interferometer zu einem Interferogramm überlagert. Stereographie dient zur raumtreuen Abbildung von Meßobjekten. Dabei werden stereoskopische Halbbilder erzeugt und ausgewertet. Jeder Raumpunkt wird durch korrespondierende Bildpunkte auf jedem Halbbild abgebildet, die durch Parallaxe gering seitenverschoben zueinander sind und durch welche eine Tiefenlage jedes Raumpunktes aus den Halbbildern mathematisch reproduzierbar ermittelt werden kann.

Entsprechend dem in Figur 3 dargestellten Ablaufdiagramm, dessen Schritte 301 bis 306 den Schritten 201 bis 206 des Ablaufdiagramms gemäß Figur 2 entsprechen, können aus dem ermitteltem Spaltmaß und der ermittelten Bündigkeit Korrekturwerte für eine Positionierung zueinander auszurichtender Karosserieteile 101, 102 durch die Karosserieteile 101, 102 positionierende Roboter 106 berechnet werden. Auf Grundlage eines in Schritt 306 durchgeführten Vergleichs zwischen Soll-und Ist-Werten werden gemäß Schritt 307 Korrekturwerte berechnet und diese anschließend in Schritt 308 an jeweilige Robotersteuerungseinheiten gesendet. Anhand der Korrekturwerte wird die Positionierung der Karosserieteile 101, 102 durch die Roboter 106 angepaßt. Schließlich erfolgt in Schritt 303 eine erneute Vermessung des 3D-Oberflächen-Profils der Meßobjekte darstellenden Karosserieteile 101, 102.

Ein Verfahren zur Ermittlung von Spaltmaß und Bündigkeit von Karosserieteilen entsprechend den in den Figuren 2 und 3 dargestellten Ablaufdiagrammen ermöglicht stabilere Meßwerte, da durch eine Erweiterung um eine räumliche Dimension deutlich mehr Daten für eine Berechnung von Spaltmaß und Bündigkeit herangezogen werden können. Außerdem können mehrere Spalte mit einer Meßsonde gleichzeitig vermessen werden. Darüber hinaus kann eine große Fahrzeugpalette mit einer Meßsonde vermessen werden. Hieraus ergeben sich beträchtliche Kosteneinsparungen durch eine minimierte Anzahl benötigter Sensoren. Dementsprechend ergeben sich auch Kosteneinsparungen bei einer Produktionsumstellung auf neue Fahrzeugtypen.

Ferner bietet die vorliegende Erfindung den Vorteil, daß eine Ausrichtung von Meßsonden im Vergleich zu herkömmlichen Verfahren wesentlich unkritischer gegenüber einer Orientierung der Meßsonden zum jeweiligen Spalt ist. Die Bündigkeit kann außerdem in einer besser definierten Weise gemessen werden als mit zweidimensionalen Meßsystemen. Zudem kann auch eine Verdrehung von Karosserieteilen zueinander genau ermittelt werden. Darüber hinaus kann ein den Spalt zwischen zwei Kanten benachbarter Karosserieteile definierender Winkel bereits innerhalb eines Spaltes gemessen werden.

## Patentansprüche

1. Verfahren zur Ermittlung von Spaltmaß und/oder Bündigkeit von Karosserieteilen eines Kraftfahrzeugs, bei dem
- zueinander auszurichtende Karosserieteile (101, 102) an einer Mehrzahl vorgebbarer Meßbereiche (141) mittels jeweils einer Abtasteinrichtung (104) dreidimensional abgetastet werden, wobei ein 3D-Oberflächen-Profil der Karosserieteile (101, 102) als Meßobjekten vermessen wird, und wobei die Meßbereiche (141) fahrzeugspezifisch parametriert sind und die Abtasteinrichtungen (104) anhand der vorgegebenen fahrzeugspezifischen Parametrierung auf zumindest eine Karosseriefuge (103) ausgerichtet werden,
- aus mittels der Abtasteinrichtungen (104) erfaßten Abtastwerten den auszurichtenden Karosserieteilen (101, 102) zugeordnete dreidimensionale Flächenelemente (401, 402) innerhalb der Meßbereiche (141) ermittelt werden, wobei den auszurichtenden Karosserieteilen (101, 102) innerhalb der Meßbereiche (141) zugeordnete dreidimensionale Flächenelemente (401, 402) aus mittels der Abtasteinrichtungen (104) erfaßten Abtastwerten identifiziert werden,
- für die ermittelten dreidimensionalen Flächenelemente (401, 402) jeweils Art, Position und Orientierung im Raum ermittelt werden,
- aus Art, Position und Orientierung zumindest zweier benachbarter dreidimensionaler Flächenelemente (401, 402) Spaltmaß und/oder Bündigkeit für zumindest zwei zueinander auszurichtende Karosserieteile (101, 102) ermittelt werden.

2. Verfahren nach Anspruch 1,
bei dem die dreidimensionalen Flächenelemente (401, 402) mittels Profilometrie ermittelt werden.

3. Verfahren nach einem der Ansprüche 1 oder 2,
bei dem eine flächenhafte Vermessung der zueinander auszurichtenden Karosserieteile (101, 102) mittels Triangulation unter Verwendung von auf die Meßbereiche (141) emittiertem codiertem Licht erfolgt.

4. Verfahren nach einem der Ansprüche 1 oder 2,
bei dem eine flächenhafte Vermessung der zueinander auszurichtenden Karosserieteile (101, 102) mittels Interferometrie oder Stereographie erfolgt.

5. Verfahren nach einem der Ansprüche 1 bis 4,
bei dem eine gleichzeitige Vermessung mehrerer Karosseriefugen erfolgt.

6. Verfahren nach einem der Ansprüche 1 bis 5,
bei dem aus ermitteltem Spaltmaß und ermittelter Bündigkeit Korrekturwerte für eine Positionierung zueinander auszurichtender Karosserieteile (101, 102) durch die Karosserieteile aufnehmende (101, 102) Transport- und/oder Montagevorrichtungen (106).

7. Steuerungsprogramm, das in einen Arbeitsspeicher einer Rechnereinheit ladbar ist und zumindest einen durch einen Prozessor verarbeitbaren Codeabschnitt aufweist, bei dessen Ausführung,
- eine dreidimensionale Abtastung zueinander auszurichtender Karosserieteile (101, 102) an einer Mehrzahl vorgebbarer Meßbereiche (141) mittels jeweils einer Abtasteinrichtung (104) veranlaßt wird, wobei ein 3D-Oberflächen-Profil der Karosserieteile (101, 102) als Meßobjekten vermessen wird, und wobei die Meßbereiche (141) fahrzeugspezifisch parametriert sind und die Abtasteinrichtungen (104) anhand der vorgegebenen fahrzeugspezifischen Parametrierung auf zumindest eine Karosseriefuge (103) ausgerichtet werden,
- aus mittels der Abtasteinrichtungen (104) erfaßten Abtastwerten den auszurichtenden Karosserieteilen (101, 102) zugeordnete dreidimensionale Flächenelemente (401, 402) innerhalb der Meßbereiche (141) ermittelt werden, wobei den auszurichtenden Karosserieteilen (101, 102) innerhalb der Meßbereiche (141) zugeordnete dreidimensionale Flächenelemente (401, 402) aus mittels der Abtasteinrichtungen (104) erfaßten Abtastwerten identifiziert werden,
- für die ermittelten dreidimensionalen Flächenelemente (401, 402) jeweils Art, Position und Orientierung im Raum ermittelt werden,
- aus Art, Position und Orientierung zumindest zweier benachbarter dreidimensionaler Flächenelemente (401, 402) Spaltmaß und/oder Bündigkeit für zumindest zwei zueinander auszurichtende Karosserieteile (101, 102) ermittelt werden,
wenn das Steuerungsprogramm in der Rechnereinheit abläuft.

8. Meßvorrichtung zur Ermittlung von Spaltmaß und/oder Bündigkeit von Karosserieteilen eines Kraftfahrzeugs mit
- einer Mehrzahl von Abtasteinrichtungen (104) zur dreidimensionalen Abtastung zueinander auszurichtender Karosserieteile (101, 102) an einer Mehrzahl vorgebbarer Meßbereiche (141) und zur Vermessung eines 3D-Oberflächen-Profil der Karosserieteile (101, 102) als Meßobjekten, wobei die Meßbereiche (141) fahrzeugspezifisch parametriert sind und die Abtasteinrichtungen (104) anhand der vorgegebenen fahrzeugspezifischen Parametrierung auf zumindest eine Karosseriefuge (103) ausrichtbar sind,
- einer mit den Abtasteinrichtungen (104) verbundenen Rechnereinheit (105)
- zur Ermittlung von den auszurichtenden Karosserieteilen (101, 102) zugeordneten dreidimensionalen Flächenelementen (401, 402) innerhalb der Meßbereiche (141) aus mittels der Abtasteinrichtungen (104) erfaßten Abtastwerten, wobei den auszurichtenden Karosserieteilen (101, 102) innerhalb der Meßbereiche (141) zugeordnete dreidimensionale Flächenelemente (401, 402) aus mittels der Abtasteinrichtungen (104) erfaßten Abtastwerten identifizierbar sind,
- zur Ermittlung von jeweils Art, Position und Orientierung im Raum für die ermittelten dreidimensionalen Flächenelemente (401, 402) und
- zur Ermittlung von Spaltmaß und/oder Bündigkeit für zumindest zwei zueinander auszurichtende Karosserieteile (101, 102) aus Art, Position und Orientierung zumindest zweier benachbarter dreidimensionaler Flächenelemente (401, 402).

## Claims

1. Method for determining gap dimensions and/or flushness of bodywork parts of a motor vehicle, in which
- bodywork parts (101, 102) to be aligned with one another are scanned in three dimensions at a plurality of prescribable measurement areas (141) by means of a scanning device (104) in each case, a 3D surface profile of the bodywork parts (101, 102) being measured as measurement objects, and the measurement areas (141) being parametrized specifically by vehicle, and the scanning devices (104) being aligned with at least one bodywork joint (103) with the aid of the prescribed vehicle-specific parametrization,
- three-dimensional planar elements (401, 402) within the measurement areas (141) assigned to the bodywork parts (101, 102) to be aligned are determined from scanned values acquired by means of the scanning devices (104), three-dimensional planar elements (401, 402) assigned to the bodywork parts (101, 102) to be aligned within the measurement areas (141) being identified from scanned values acquired by means of the scanning devices (104),
- type, position and orientation in space are respectively determined for the determined three-dimensional planar elements (401, 402), and
- gap dimensions and/or flushness are determined for at least two bodywork parts (101, 102) to be aligned with one another from type, position and orientation of at least two neighbouring three-dimensional planar elements (401, 402).

2. Method according to Claim 1, in which the three-dimensional planar elements (401, 402) are determined by means of profile geometry.

3. Method according to either of Claims 1 and 2, in which a planar measurement of the bodywork parts (101, 102) to be aligned with one another is performed by means of triangulation with the use of coded light emitted onto the measurement areas (141).

4. Method according to either of Claims 1 and 2, in which a planar measurement of the bodywork parts (101, 102) to be aligned with one another is performed by means of interferometry or stereography.

5. Method according to one of Claims 1 to 4, in which a simultaneous measurement of a plurality of bodywork joints is performed.

6. Method according to one of Claims 1 to 5, in which correction values for positioning bodywork parts (101, 102) to be aligned with one another are acquired from determined gap dimensions and determined flushness by the transport and/or mounting apparatuses (106) holding the bodywork parts (101, 102).

7. Control program which can be loaded into a main memory of a computer unit and has at least one code segment which can be processed by a processor, in the design of which,
- three-dimensional scanning of bodywork parts (101, 102) to be aligned with one another is prompted at a plurality of prescribable measurement areas (141) in each case, a 3D surface profile of the bodywork parts (101, 102) being measured as measurement objects, and the measurement areas (141) being parametrized specifically by vehicle, and the scanning devices (104) being aligned with at least one bodywork joint (103) with the aid of the prescribed vehicle-specific parametrization,
- three-dimensional planar elements (401, 402) within the measurement areas (141) assigned to the bodywork parts (101, 102) to be aligned are determined from scanned values acquired by means of the scanning devices (104), three-dimensional planar elements (401, 402) assigned to the bodywork parts (101, 102) to be aligned within the measurement areas (141) being identified from scanned values acquired by means of the scanning devices (104),
- type, position and orientation in space are respectively determined for the determined three-dimensional planar elements (401, 402), and
- gap dimensions and/or flushness are determined for at least two bodywork parts (101, 102) to be aligned with one another from type, position and orientation of at least two neighbouring three-dimensional planar elements (401, 402),
when the control program is running in the computer unit.

8. Measuring device for determining gap dimensions and/or flushness of bodywork parts of a motor vehicle, having
- a plurality of scanning devices (104) for three-dimensional scanning of bodywork parts (101, 102) to be aligned with one another at a plurality of prescribable measurement areas (141), and for measuring a 3D surface profile of the bodywork parts (101, 102) as measurement objects, the measurement areas (141) being parametrized specifically by vehicle, and it being possible to align the scanning devices (104) with at least one bodywork joint (103) with the aid of the prescribed vehicle-specific parametrization,
- a computer unit (105) connected to the scanning devices (104)
- for determining three-dimensional planar elements (401, 402) within the measurement areas (141) assigned to the bodywork parts (101, 102) to be aligned from scanned values acquired by means of the scanning devices (104), it being possible for three-dimensional planar elements (401, 402) assigned to the bodywork parts (101, 102) to be aligned within the measurement areas (141) to be identified from scanned values acquired by means of the scanning devices (104),
- for respectively determining type, position and orientation in space for the determined three-dimensional planar elements (401, 402), and
- for determining gap dimensions and/or flushness for at least two bodywork parts (101, 102) to be aligned with one another from type, position and orientation of at least two neighbouring three-dimensional planar elements (401, 402).

## Revendications

1. Procédé de détermination de l'écartement et/ou de l'affleurement de pièces de carrosserie d'un véhicule automobile, dans lequel
- on analyse en trois dimensions des pièces ( 101, 102 ) de carrosserie à orienter l'une par rapport à l'autre en une multiplicité d'endroits ( 141 ) de mesure pouvant être prescrits au moyen respectivement d'un dispositif ( 104 ) d'analyse, en mesurant comme objet de mesure un profil de surface en 3D des pièces ( 101, 102 ) de carrosserie et dans lequel on paramétrise d'une manière spécifique au véhicule les endroits ( 141 ) de mesure et l'on oriente les dispositifs ( 104 ) d'analyse au moyen du paramétrage prescrit spécifique au véhicule sur au moins un joint ( 108 ) de la carrosserie,
- on détermine au sein des endroits ( 141 ) de mesure, à partir de valeurs d'analyse détectées au moyen des dispositifs ( 104 ) d'analyse, des éléments ( 401, 402 ) de surface en trois dimensions associés aux pièces ( 101, 102 ) de carrosserie à orienter, dans lequel on identifie, à partir de valeurs d'analyse détectées au moyen des dispositifs ( 104 ) d'analyse, des éléments ( 401, 402 ) de surface en trois dimensions associés au sein des endroits ( 141 ) de mesure aux pièces ( 101, 102 ) de carrosserie à orienter,
- on détermine pour les éléments ( 401, 402 ) de surface en trois dimensions déterminés respectivement le type, la position et l'orientation dans l'espace,
- à partir du type, de la position et de l'orientation d'au moins deux éléments ( 401, 402 ) de surface en trois dimensions voisins, on détermine l'écartement et/ou l'affleurement d'au moins deux pièces ( 101, 102 ) de carrosserie à orienter l'une par rapport à l'autre.

2. Procédé suivant la revendication 1,
dans lequel on détermine les éléments ( 401, 402 ) de surface en trois dimensions au moyen d'une profilométrie.

3. Procédé suivant l'une des revendications 1 ou 2,
dans lequel on effectue la mesure en surface des pièces ( 101, 102 ) de carrosserie à orienter l'une par rapport à l'autre au moyen d'une triangulation en utilisant de la lumière codée émise sur des endroits ( 141 ) de mesure.

4. Procédé suivant l'une des revendications 1 ou 2,
dans lequel on effectue la mesure en surface des pièces ( 101, 102 ) de carrosserie à orienter l'une par rapport à l'autre au moyen d'une interférométrie ou d'une stéréographie.

5. Procédé suivant l'une des revendications 1 à 4,
dans lequel on effectue une mesure en même temps de plusieurs joints de carrosserie.

6. Procédé suivant l'une des revendications 1 à 5,
dans lequel on détermine, à partir de l'écartement déterminé et de l'affleurement déterminé, des valeurs de correction d'un positionnement de pièces ( 101, 102 ) de carrosserie à orienter l'une par rapport à l'autre par le dispositif ( 106 ) de transport et/ou de montage recevant les pièces ( 101, 102 ) de carrosserie.

7. Programme de commande qui peut être chargé dans une mémoire de travail d'une unité informatique et qui a au moins une partie de code pouvant être traitée par un processeur, dans l'exécution duquel,
- une analyse en trois dimensions de pièces ( 101, 102 ) de carrosserie à orienter l'une par rapport à l'autre en une multiplicité d'endroits ( 141 ) de mesure pouvant être prescrits est réalisée au moyen de respectivement un dispositif ( 104 ) d'analyse, un profil de surface en 3D des pièces ( 101, 102 ) de carrosserie étant mesuré comme objet de mesure et les endroits ( 141 ) de mesure étant paramétrés d'une manière spécifique à un véhicule et les dispositifs ( 104 ) d'analyse étant dirigés au moyen du paramétrage prescrit spécifique à un véhicule sur au moins un joint ( 103 ) de carrosserie,
- à partir de valeurs d'analyse détectées au moyen des dispositifs ( 104 ) d'analyse, les éléments ( 141, 402 ) de surface en trois dimensions associés aux pièces ( 101, 102 ) de carrosserie à orienter les unes par rapport aux autres sont déterminés au sein des endroits ( 141 ) de mesure, des éléments ( 401, 402 ) de surface en trois dimensions associés au sein des endroits ( 141 ) de mesure étant identifiés à partir des valeurs d'analyse détectées au moyen des dispositifs ( 104 ) d'analyse,
- pour les éléments ( 401, 402 ) de surface en trois dimensions déterminés, respectivement le type, la position et l'orientation dans l'espace sont déterminés,
- à partir du type, de la position et de l'orientation d'au moins deux éléments ( 401, 402 ) de surface en trois dimensions voisins, l'écartement et/ou l'affleurement d'au moins deux pièces ( 101, 102 ) de carrosserie à orienter l'une par rapport à l'autre sont déterminés,
- lorsque le programme de commande se déroule dans une unité informatique.

8. Dispositif de mesure pour la détermination de l'écartement et/ou de l'affleurement de pièces de carrosserie d'un véhicule automobile comprenant
- une multiplicité de dispositifs ( 104 ) d'analyse pour l'analyse en trois dimensions de pièces ( 101, 102 ) de carrosserie orientées les unes par rapport aux autres en une multiplicité d'endroits ( 141 ) de mesure pouvant être prescrits et pour la mesure d'un profil de surface en 3D des pièces ( 101, 102 ) de carrosserie comme objet de mesure, les endroits ( 141 ) de mesure étant paramétrés d'une manière spécifique à un véhicule et les dispositifs ( 104 ) d'analyse pouvant être orientés sur au moins un joint ( 103 ) de carrosserie au moyen du paramétrage prescrit spécifique à un véhicule,
- une unité ( 105 ) informatique reliée au dispositif ( 104 ) d'analyse,
- pour la détermination des éléments ( 401, 402 ) de surface en trois dimensions associés aux pièces ( 101, 102 ) de carrosserie orientées les unes par rapport aux autres au sein des endroits ( 141 ) de mesure à partir de valeurs d'analyse détectées au moyen des dispositifs ( 104 ) d'analyse, des éléments ( 401, 402 ) de surface en trois dimensions, associés au sein des endroits ( 141 ) de mesure aux pièces ( 101, 102 ) de carrosserie à orienter les unes par rapport aux autres au sein des endroits ( 141 ) de mesure pouvant être identifiés à partir de valeurs d'analyse détectées au moyen des dispositifs ( 104 ) d'analyse,
- pour la détermination de respectivement le type, la position et l'orientation dans l'espace des éléments ( 401, 402 ) de surface en trois dimensions déterminés, et
- pour la détermination de l'écartement et/ou de l'affleurement d'au moins deux pièces ( 101, 102 ) de carrosserie à orienter l'une par rapport à l'autre à partir du type, de la position et de l'orientation d'au moins deux éléments ( 401, 402 ) de surface voisins en trois dimensions.
